# EUROPEAN PATENT SPECIFICATION

(11) **EP 3 230 615 B1**
(45) Date of publication and mention of the grant of the patent: **31.07.2019**
(21) Application number: 15817552.1
(22) Date of filing: 04.12.2015
(51) Int. Cl.: F16D 65/847, F16D 65/12

(54) **DISC FOR A DISC BRAKE OF THE VENTILATED TYPE, DEVICE AND METHOD FOR IMPROVING THE EFFICIENCY OF A DISC FOR A DISC BRAKE OF THE VENTILATED TYPE"**
SCHEIBE FÜR EINE SCHEIBENBREMSE MIT LUFTUMWÄLZUNG, VORRICHTUNG UND VERFAHREN ZUR VERBESSERUNG DER EFFIZIENZ EINES SCHEIBE FÜR EINE SCHEIBENBREMSE MIT LUFTUMWÄLZUNG
DISQUE POUR FREIN À DISQUE DU TYPE VENTILÉ, DISPOSITIF ET PROCÉDÉ POUR AMÉLIORER LE RENDEMENT D'UN DISQUE POUR FREIN À DISQUE DU TYPE VENTILÉ

(30) Priority: 12.12.2014 IT PD20140339
(43) Date of publication of application: 18.10.2017
(73) Proprietor: Piaggio&C. S.p.A., 56025 Pontedera (Pisa) (IT)
(72) Inventor: MARANO, Luca, I-56025 Pontedera Pisa (IT)
(74) Representative: Zanettin, Gianluigi
(86) International application number: PCT/IB2015/059350
(87) International publication number: WO 2016/092435

(56) References cited:
- DE-A1- 3 446 058
- DE-A1- 19 839 504
- DE-A1- 19 957 484
- GB-A- 2 174 772

## Description

### Field of application

This invention relates to a disc for a disc brake of the ventilated type as well as a device and method for improving the efficiency of a disc for a disc brake of the ventilated type.

The disc for a disc brake according to this invention may find particular application in the automotive and motorcycle field. However, application is not precluded also in the heavy haulage vehicle sector, such trucks, and stationary type machinery field.

### State of the art

As is known, disc brake discs comprise an annular portion known as the braking band intended to cooperate with the friction linings (or pads) of a calliper.

In the case of discs of the ventilated type, the braking band is realised by means of two flanges facing each other and interconnected by means of connecting elements, for example in the shape of fins. The outer surfaces of the two flanges define opposite braking surfaces while the inner surfaces delimit, jointly with the fins, ventilation channels for cooling the disc crossed by the air according to a centrifugal direction during the rotational motion of the disc itself.

The cooling of the disc is functional to maintain the temperature within optimum intervals, reducing as much as possible the risk of dangerous overheating which can lead to a collapse of braking performance or even to structural failure of the brake disc. Typically, these are situations that may occur in the case of excessive and repeated stresses on the brakes. Predominantly, ventilated discs are therefore used on vehicles of high power and/or high weight, since they can cause significant stress to the braking system.

It is also known that, always for the purposes of braking performance, it is essential that the friction linings and the braking bands come as quickly as possible up to temperature, i.e., that they reach optimum operating temperatures in a short time. The optimum temperatures are greatly dependent on the material of which the friction linings and braking bands are made, as well as the times for reaching them. Brake discs are commonly made of grey cast iron, but are sometimes made of stainless steel because they come up to temperature more easily and quickly. However, in the competition field, carbon discs are preferred, which require high temperatures to generate braking force but have the particularity that the coefficient of friction increases with increasing temperature.

In the phase of the warming up of a braking band of a ventilated disc, the cooling induced by the ventilation channels - essential during use at operating temperature - can therefore have a totally unwanted effect, delaying the desired heating of the braking band.

There is thus a need to reduce the time for warming up a braking band of a ventilated disc, counteracting, in this phase, the cooling effect induced by the ventilation channels.

As is known, the ventilation that is created in discs of the ventilated type occurs at the expense of the rotational movement of the disc. One speaks of ventilation losses, which adversely affect the rotational efficiency of the disc, and then - in the most frequent case of application on vehicles - also the overall energy efficiency of the vehicle. These losses are justifiable in the braking phases, when ventilation is essential for cooling the disc, but they are not when the disc remains inactive, i.e., in a large part of the useful life of a ventilated disc.

With a view to improving the energy efficiency of vehicles, there is therefore a need to improve the rotational efficiency of ventilated discs, reducing losses due to ventilation. DE-A-198 39 504 discloses a disc according to the preamble of claim 1.

### Presentation of the invention

Therefore, the purpose of this invention is to eliminate, or at least reduce, the above-mentioned problems, relative to the prior art, by providing a disc for a disc brake of the ventilated type that can be brought to optimum temperatures for the braking band in shorter times with respect to those of similar traditional ventilated discs, being the environmental and usage conditions equal.

A further purpose of this invention is that of making available disc brake disc of the ventilated type that has greater rotational efficiency with respect to those of similar traditional ventilated discs, being the environmental and usage conditions equal.

A further purpose of this invention is to make available a disc for a disc brake of the ventilated type that is operatively simple to manage.

A further purpose of this invention is to make available a disc for a disc brake of the ventilated type that can be installed on the vehicle without particular complications with respect to traditional ventilated discs.

A further purpose of this invention is to make available a disc for a disc brake of the ventilated type that has production costs comparable to similar traditional ventilated discs.

A further purpose of this invention is to make available a method for improving the efficiency of a disc for a disc brake of the ventilated type.

### Description of the drawings

The technical characteristics of the invention can be clearly understood from the content of the claims listed below and its advantages will become more apparent from the detailed description that follows, made with reference to the accompanying drawings, which show one or more purely exemplary and non-limiting embodiments wherein:
- Figure 1 shows a plan view of a disc brake disc of the ventilated type;
- Figure 2 is a sectional view of the disc of Figure 1, according to the line II-II;
- Figure 3 shows a detail of the ventilated disc of Figure 2, provided with reversible closure means of the ventilation channels, illustrated in a closed configuration of the channels, according to a first embodiment of the invention;
- Figure 4 shows the detail of the ventilated disc of Figure 3, in which the reversible closure means of the ventilation channels are illustrated in an open configuration of the channels;
- Figures 5 and 6 show a detail of the ventilated disc of Figure 2, provided with reversible closure means of the ventilation channels, according to a second embodiment of the invention, illustrated respectively in a closed and open configuration of the ventilation channels;
- Figure 7 shows an overall perspective view of the reversible closure means of the ventilation channels, realised according to the aforesaid second embodiment of the invention, not installed on the disc;
- Figure 8 shows an overall perspective view of the reversible closure means of the ventilation channels, realised according to a third embodiment of the invention, not installed on the disc and illustrated in the closed condition;
- Figure 9 shows an overall perspective view of the reversible closure means of Figure, illustrated with some appendages in an open condition; and
- Figure 10 shows a sectional view of another example of disc brake disc of the ventilated type, alternative to that illustrated in Figures 1 and 2.

### Detailed description

With reference to the drawings, the numeral 1 generally indicates a disc brake disc of the ventilated type according to the invention, intended to be used in a disc brake (not shown) of a vehicle, such as an automobile.

Preferably, the disc 1 has a substantially circular shape and extends about an axis indicated in the Figures with Z.

Axial direction with respect to the disc or the braking band means a direction parallel to the axis Z. Radial direction with respect to the disc or the braking band means a direction perpendicular to the axial direction or the axis Z. Finally, direction tangential or circumferential to the disc means a direction coincident with a circumference having its centre on the axis Z.

The ventilated disc 1 comprises a braking band 2, which is intended to cooperate with the friction linings of callipers of the disc brake to exert the braking action on the vehicle.

The braking band 2 is defined by two flanges 3 and 4 that are coaxial to the axis Z and delimit an internal axial cavity 25 of the disc. The two flanges 3 and 4 are mutually facing and spaced apart to form an interspace 5 that, during the rotation of the disc, is the seat of a flow of air according to a centrifugal direction functional to the cooling of the disc, i.e., from the inside of the disc towards the outside.

Ventilation channels 10 are delimited Inside the interspace 5, crossed by flows of air according to a centrifugal direction during the rotational motion of the disc itself.

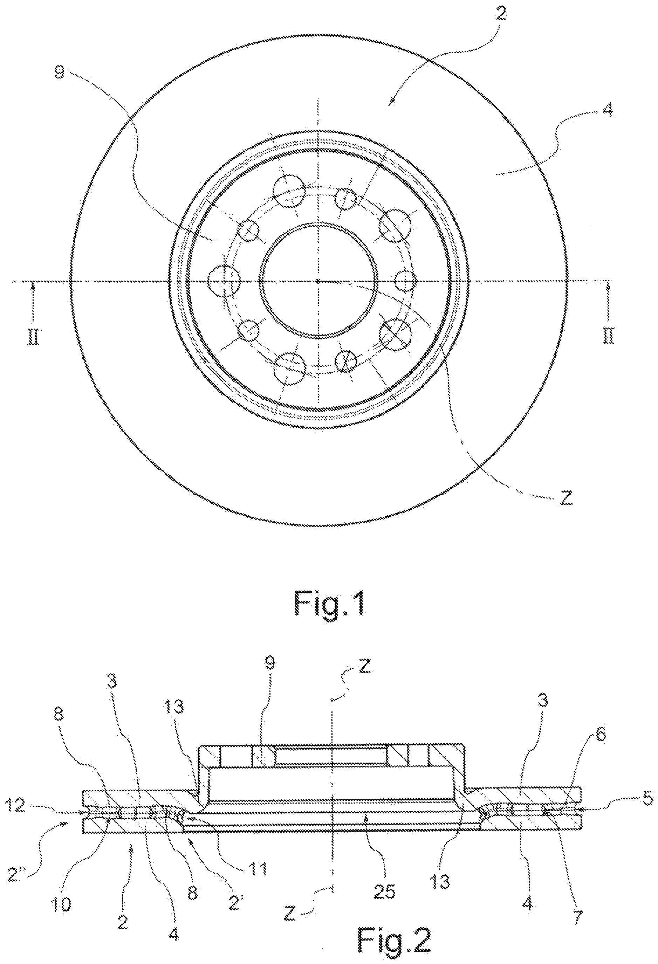

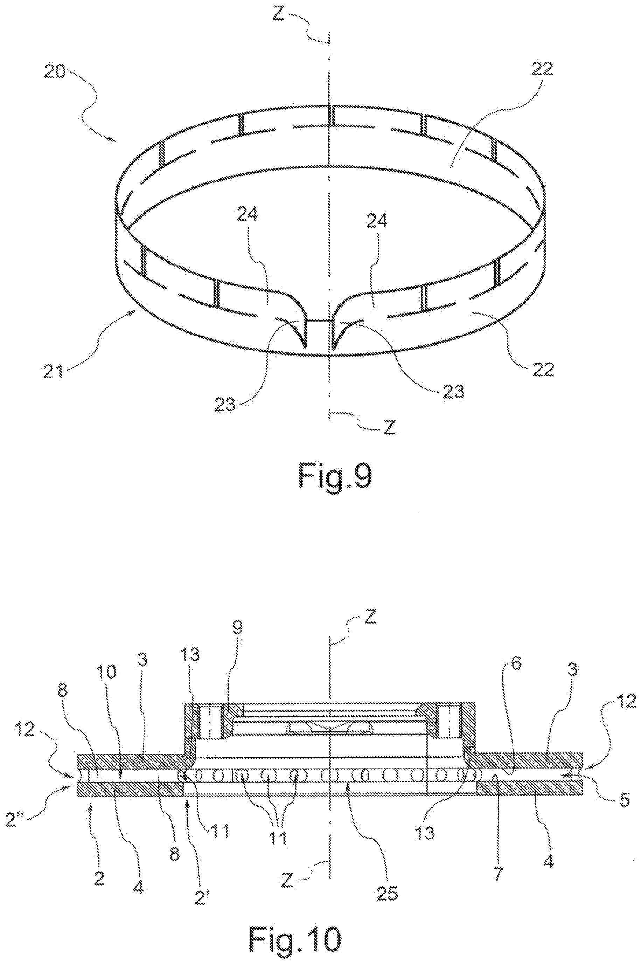

As shown in particular in Figures 2 and 10, each ventilation channel 10 extends from at least one inlet 11 formed on an inner edge 2' of the braking band 2 up to at least one outlet 12 formed on an outer edge 2" of the braking band 2.

In particular, the two flanges 3,4 have facing surfaces 6,7 from which connecting elements 8 extend transversely between the flanges 3,4. The ventilation channels 10 inside the interspace 5 are delimited by the two facing surfaces 6,7 in conjunction with the connecting elements 8.

The connecting elements 8 can be shaped so as to appropriately direct the air flows inside the interspace 5 and can be realised in many forms. In particular, as shown in Figures 2 and 10, the connecting elements 8 are constituted by fins, having a radial extension with respect to the axis Z. The fins can have a continuous radial development between the inner edge 2' and the outer edge 2" (as in Figure 10) or discontinuous to allow a fluid communication between adjacent ventilation channels (as in Figure 2).

Preferably, the connecting elements 8 are made of the same material as the flanges 3,4 and in one piece with them.

Advantageously, the ventilated disc 1 comprises connection means to a rotation axis, such as the hub of a wheel of the vehicle or the shaft of a stationary machine.

In particular, as illustrated in the accompanying drawings, the connection means to the rotation axis can be constituted by a supporting bell 9, coaxially associated to the braking band 2. The bell is axially displaced with respect to the braking band, so that a first flange 3 is disposed closer to the supporting bell 9, while the second flange 4 is disposed farther away from it. The supporting bell 9 can be formed in one piece with the braking band 2 (as in the examples illustrated in the accompanying drawings) or be realised as a separate element, possibly in a different material with respect to the band, and fixed to the band by suitable anchoring means, such as screws or bolts.

The connecting means to the rotation axis may also be constituted by annular anchoring elements, and may be substantially coplanar with the braking band.

Under normal conditions of use, the ventilation flows upstream of the inlets 11 of the channels have a predominantly axial course induced by the bulk of the hub supporting the disc and upright. Therefore, the ventilation flow originates in the internal axial cavity of the disc, on the side of the disc opposite that on which are positioned the connecting means to the rotation axis.

The inlets 11 of the ventilation channels 10 can be shaped so as to present an axially oriented entrance, suitable to facilitate the entering air flow, as shown in Figures 2 to 6. The inlets 11 of the channels may, however, also not have an axially oriented entrance, as shown in Figure 10.

According to the invention, the ventilated disc 1 comprises closure means 20,21,22,23 for reversibly closing inlets 11 of all or at least a part of the ventilation channels 10.

"Closing" the inlets of the ventilation channels means both a complete closure of the useful opening of the inlets, for the purpose of preventing any flow of air through them, and a choking of such opening to limit the air flow.

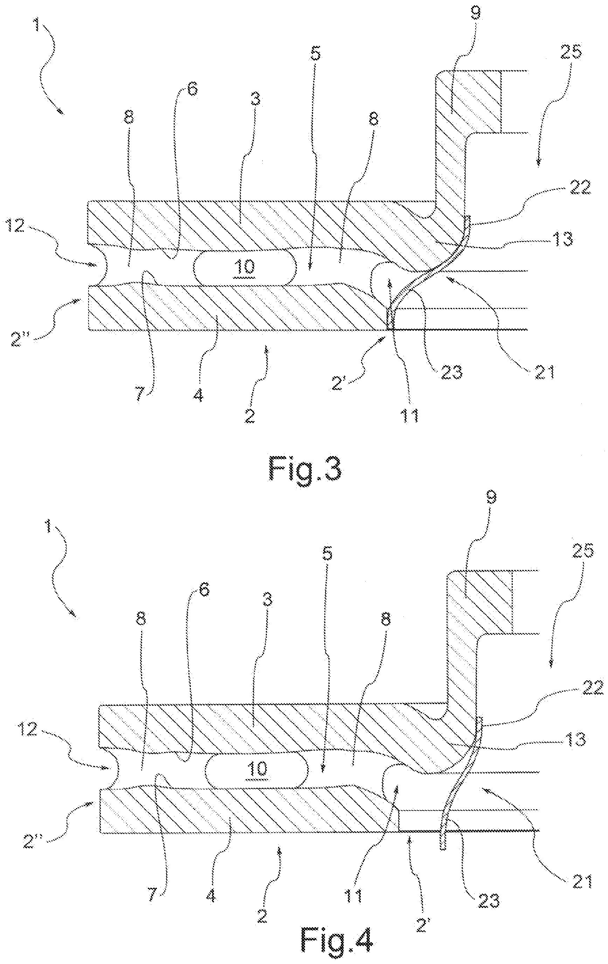

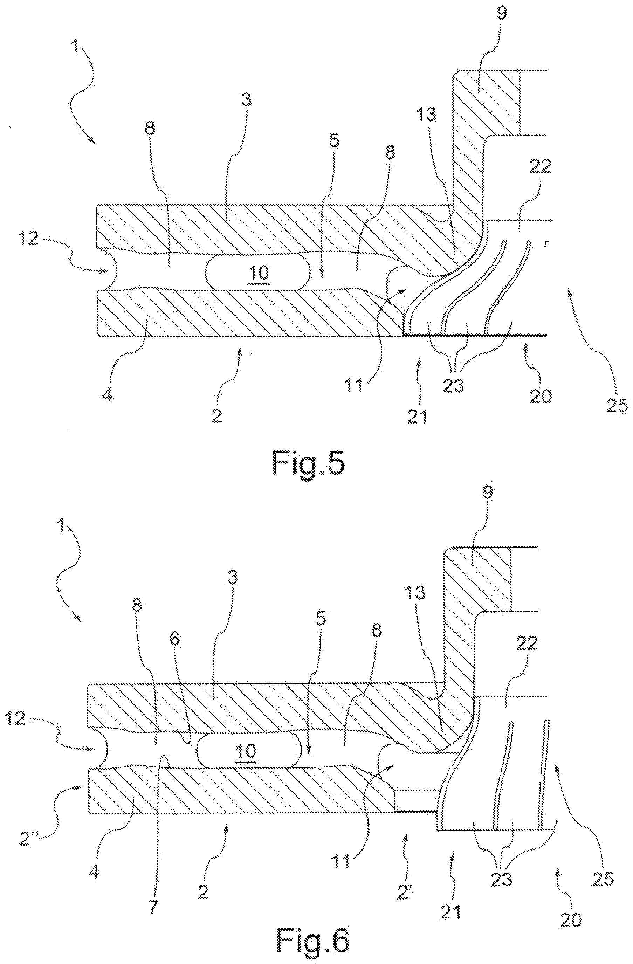

The aforesaid closure means 20,21,22,23 are sensitive to the temperature of the braking band 2 in such a way that, when the temperature of the braking band exceeds a predefined threshold value, they automatically move from a closed position of the inlets, in which the air flow through the inlets is prevented or at least choked or limited (see Figures 3 and 5), to at least an open position of the inlets, in which a complete air flow through the inlets is allowed (see Figures 4 and 6), and vice versa.

"Threshold value" means both a precise temperature value, as well as a, more or less narrow, range of values.

"Predefined threshold value" is chosen as a function of the optimum operating temperature values for the braking band.

Below this "predefined threshold value", the braking band is not in the optimum temperature operating conditions and does not need to be cooled; on the contrary, a cooling of the braking band would slow down its warming up. While, above this "predefined threshold value", the braking band is in the optimum temperature operating conditions and its cooling can begin to be appropriate.

Thanks to the invention and the aforesaid reversible closure means, the disc brake disc of the ventilated type can be brought to optimum operating temperatures for the braking band in shorter times with respect to those of similar traditional ventilated discs, being the environmental and usage conditions equal. In fact, the reversible closure means of the ventilation channels, sensitive to the temperature of the braking band, allow eliminating, or at least significantly reducing, the cooling of the disc induced by the ventilation in the warm-up phase of disc itself (i.e., when the temperatures of the band are below the aforesaid predefined threshold value), thus reducing the times to reach the optimum operating temperatures.

However, this advantageous effect is achieved without losing effectiveness in the control of the temperature of the braking band during when the disc is warmed up. In fact, the reversible closure means of the ventilation channels, sensitive to the temperature of the braking band, allow ventilation of the disc and thus its cooling, when necessary, i.e., when the disc is warmed up (i.e., when the temperatures of the band are above the aforesaid predefined threshold value).

Thanks to the invention it is also possible to make the rotation of the ventilated disc more efficient in all phases of active non-intervention or warming up of the disc. In fact, in these phases - thanks to the intervention of the reversible closure means of the inlets of the ventilation channels - ventilation flows and, thus, also ventilation losses are eliminated or significantly reduced. In this way, the power absorbed for pumping air is reduced or eliminated, thus increasing the rotational efficiency of the disc.

Advantageously, as will be clarified in the description below, the reversible closure means may be structured so as to offer a calibrated closing intervention as a function of the temperature of the braking band.

In particular, the closure means 20,21,22,23 can move to different open positions depending on the temperature value of the braking band above said threshold value. These multiple closure positions differ from each other for the degree of opening of the inlets of the ventilation channels.

The closure means comprise a plurality of obstruction bodies 21 of the inlets 11 of the ventilation channels 10. These obstruction bodies 21 are suitable to assume at least two different steric (spatial) configurations depending on whether they are at a temperature respectively below or above a temperature equal, or proportional, to the predefined threshold value of the braking band.

In a first steric (spatial) configuration (see Figures 3 and 5) the obstruction bodies assume the aforesaid closure position and in a second steric (spatial) configuration (see Figures 4 and 6) the obstruction bodies assume the open position.

Preferably, as illustrated in the accompanying drawings, the obstruction bodies 21 are arranged in correspondence of the internal axial cavity 25 of the disc 1 near the inlets 11 of the ventilation channels 10.

The movement of an obstruction body between the aforesaid at least two steric (spatial) configurations can take place progressively through intermediate steric (spatial) configurations (not shown in the accompanying drawings), corresponding to different chokings of the maximum opening defined in the open position.

Advantageously, the movement of the obstruction bodies between the aforesaid at least two steric configurations can be suitably defined to determine different variations of the passage opening of the inlets of the channels, in both opening and closing, depending on the temperature variations of the braking band. In this way, it is thus possible to adjust the intervention of the obstruction bodies, in terms of speed and progressiveness in the opening/closing of the inlets of the ventilation channels as the temperature varies. In other words, it is possible to impose specific rules on the obstruction bodies for the variation of the opening of the air passages.

In particular, the rules for the variation of the passage openings can be proportional to the temperature variation to ensure, for example, a linear progression in opening and closing the inlets.

The rules for the variation of the passage openings can be non-proportional to the temperature variation to offer a non-linear progression in opening and closing, calibrated for specific adjustment needs. In particular, the variation rule can be of exponential type, to ensure a greater rapidity of intervention in the case of high temperature differences, and thus in the presence, for example, of abrupt overheating, and a relative slowness of intervention in the case of modest temperature differences and thus in the presence of slight heating.

The disc 1 is suitably shaped in one or more portions 13 to guide the movement of the obstruction bodies 21 between the aforesaid at least two steric configurations. Preferably these portions 13 are shaped so as to push the obstruction bodies 21 to follow a predefined rule for the variation of the air passage in correspondence of the related inlet 11.

According to an embodiment of the invention, the obstruction bodies consist of at least two materials having different coefficients of thermal expansion α. Each of these materials constitutes at least one separate portion of an obstruction body. The aforesaid different steric (spatial) configurations are derived from the different dilatometric behaviour of the said at least two distinct portions when subjected to the same temperature gradient.

In particular, the obstruction bodies can be bimetallic.

According to an alternative embodiment of the invention, the aforesaid at least two different steric (spatial) configurations derive from two different shape memories of the material constituting an obstruction body, corresponding respectively to temperatures below and above a temperature or a range of temperatures equal to or proportional to the predefined threshold value of the braking band.

Both the aforesaid embodiments allow an automatic intervention of the closure means, avoiding the adoption of control systems. This makes the ventilated disc according to the invention operationally simple to manage.

Advantageously, embodiments can be envisaged that exploit, in a combined manner, differences in dilatometric behaviour of two or more materials and different shape memories in different thermal states.

Advantageously, the obstruction bodies are sized and shaped so that, during the rotation of the ventilated disc 1, they are able to overcome the centrifugal forces generated by the rotational motion of the disc to pass from the configuration corresponding to the closed position to the configuration corresponding to the open position and to resist the centrifugal forces to maintain the open position when it is reached.

Advantageously, the obstruction bodies are sized and shaped so that, during the rotation of the ventilated disc 1, they are able to overcome not only the centrifugal forces generated by the rotational motion, but also any fluid-dynamic effects (for example, backwash) that tend to make them assume the closed position.

Preferably, in order to ensure a repeatable and reliable operating behaviour, the obstruction bodies are sized and shaped so as to be subject to the least possible vibration phenomena induced by the rotation. In particular, the obstruction bodies are structured so as to have elastic and inertial properties such as not to enter into resonance at the working frequencies of the disc (typically that of rotation of the disc brake and its multiples).

According to the embodiments illustrated in the accompanying drawings, each obstruction body is composed of a lamella 21 placed opposite one or more of the inlets 11 of the ventilation channels 10.

Preferably, each lamella 21 comprises a base 22 anchored to the disc 1, preferably in a portion thereof facing the internal axial cavity 25 (as illustrated in the accompanying drawings), and at least one appendage 23, which extends in cantilever fashion from the base 22 to be disposed of front of one or more of the inlets 11 of the ventilation channels 10. Operationally, the appendage 23 is the portion subject to assume the aforesaid at least two different steric (spatial) configurations for closing and opening, and thus intended to interact with the inlets of the ventilation channels.

The appendages 23 of the lamellae 21 may extend from the base 22 mainly in a direction substantially axial to the disc, i.e., parallel to the axis Z of the disc 1, as provided in the embodiments illustrated in Figures 4 to 7.

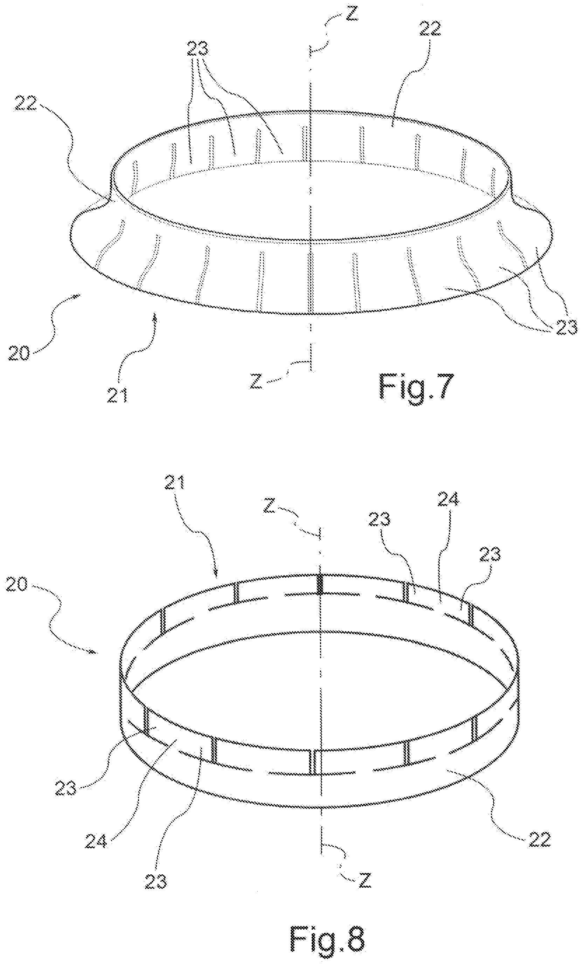

Alternatively, the appendages 23 of the lamellae 21 may extend from the base mainly in a direction tangential or circumferential to the disc, i.e., in a direction coincident with a circumference having its centre on the axis Z, as provided in the embodiment illustrated in Figure 8.

Operationally, in the steric configuration corresponding to the closed position of the appendage 23, each lamella 21 is placed alongside at least one inlet 11 of a ventilation channel 10, so as to close or at least choke the useful access opening, while in the steric configuration corresponding to the open position, the appendage 23 of one lamella 21 is disposed in order to leave free the access to the inlet of the ventilation channel.

In particular, in the configuration corresponding to the open position, the appendage 23 can be disposed externally to the ventilation channel (preferably remaining within the internal coaxial cavity 25 of the disc) at a certain distance from the inlet 11 in such a way that, between the appendage 23 and the braking band 2, an access space is created for the passage of air (as shown in Figures 4 and 6).

Alternatively, in the configuration corresponding to the open position, the appendage 23 can be disposed inside the ventilation channel (passing through the inlet 11 of the channel) and assume, preferably, an.orientation as much as possible radial, adhering to the walls of the channel so as not to obstruct the flow of air.

Preferably, the anchoring of each lamella 21 to the disc 1 takes place through the base 22. In this way, the stability to the lamella 21 and, at the same time, the freedom of movement of appendage 23, are ensured.

In particular, the base 22 can be anchored (preferably by forced connection or for example by fasteners, such as screws or bolts, not illustrated in the accompanying drawings) to one of the two flanges 3 or 4 that define the braking band 2, in correspondence of the inner edge 2' of the band itself.

As a function of the shape of the braking band and of the connecting means to the rotation axis, it is nevertheless possible that the base 22 is not anchored to the braking band 2, but to the connecting means to the rotation axis (for example to the bell, as illustrated in the accompanying drawings).

Preferably, each lamella 21 should be positioned relative to the disc so that, in the configuration corresponding to the open position of the appendage 23, the ventilation flow is not opposed, generating fluid-dynamic resistance. This must be avoided not only so as not to significantly affect the movement of the appendage, but also so as not to lose efficiency and effectiveness in the ventilation of the disc.

In the positioning of the lamellae and, in particular of the related appendages, it should be taken into account that in a ventilated disc, under normal conditions of use, the ventilation flows upstream of the inlets of the channels have a predominantly axial course induced by the bulk of the upright supporting the disc. Therefore, the ventilation flow originates in the internal axial cavity 25 of the disc, on the side of the disc opposite that on which are positioned the connecting means to the rotation axis.

Therefore, in the case in which, in the open position, the appendages 23 are found disposed externally to the channels, to avoid that the appendage 23 generates aerodynamic resistance, it is preferable that the access area for the passage of air between the appendage 23 and the braking band 2 communicates directly on the side of the disc opposite to that on which the connecting means to the rotation axis are positioned. This preferred situation is illustrated for example in Figures 4 and 6.

The problem explained above essentially arises for the embodiments with appendages 23 that extend axially from the anchoring base 22 and that can therefore axially oppose the axial flow upstream of the ventilation channels.

In this perspective, according to the embodiments illustrated in Figures 3 to 7, it is preferable that, in the case of appendages 23 with axial extension, the lamellae 21 are anchored to the disc 1 in correspondence of the connecting means 9 to the rotation axis (for example the bell) or to the flange 3 of the braking band 2 closest to the aforesaid connecting means 9, to extend towards the flange 4 farthest from the connecting means.

With this arrangement, in the case of lamellae with a predominantly axial extension, in the opening position, the appendages 23 of the lamellae 21 define an axial channel for conveying air directly to the inlet 11. This arrangement fluid-dynamically favours the ventilation flows, as it promotes the entrance of air to the inlets, and is particularly useful if adopted in discs (such as that illustrated in Figure 10) in which the inlets 11 of the channels do not present an axially oriented inlet.

ON the contrary, the problem explained above does not arise for the embodiments with appendages 23 that extend tangentially or circumferentially from the anchoring base 22. In fact, in whatever position external to the inlet the appendage 23 is found, it may not axially oppose the axial flow upstream of the ventilation channels.

In this perspective, in the case of appendages 23 with tangential or circumferential extension, the lamellae 21 can be anchored to the disc 1 indifferently in correspondence of any of the two flanges 3 or 4 or in correspondence of the connecting means 9 to the rotation axis (for example the bell).

The disc 1 is suitably shaped in its portions facing the internal axial cavity 25 so as to guide the movement of the lamellae 21, and in particular the appendages 23, between the two steric configurations corresponding to the open and closed positions, by imposing a specific deformation of the appendages. In particular, the portions of the disc to be shaped are the portions against which the appendages 23 come into contact when they deflect when subjected to temperature variations. The shaping of these portions can help the appendages 23 assume the shape that best allows following the desired rule for the variation of the passage opening. The guide effect is schematically illustrated in Figures 3 and 4 and in Figures 5 and 6. In the specific case, the shaped portion of the disc is the connecting portion 13 between the connecting means 9 to the rotation axis (i.e., the bell) and the associated flange 3 of the braking band.

Preferably, each lamella 21 is in direct or indirect thermal contact (by radiation or convection) with one of the two flanges 3,4 that define the braking band 2, so as to make it sensitive to the temperature variations of the band itself. In this way, a transmission of heat is ensured from the braking band 2 to the lamellae 21, allowing the appendage 23 to undergo the same thermal changes taking place in the braking band, and thus to assume the different steric configurations as a function of the actual thermal state of the braking band, according to the logic explained above.

To ensure a response as ready and rapid as possible, of the lamellae to the temperature variations in the range of temperature, it is opportune to reduce the thermal resistances between the braking band and each appendage, and to ensure a continuous thermal contact between each lamella and the braking band.

Preferably, the lamella 21 is made of materials with low thermal resistance, preferably metal. In particular, each lamella 21 is made in one piece, without interruptions between the base 22 and the appendage 23, to avoid introducing undesirable thermal resistances between the two portions.

Preferably, the lamella 21 is placed in direct thermal contact with the braking band.

Preferably, the lamella 21 is placed in thermal contact with the braking band in correspondence of the base 22. In fact, in this way, it is easier to ensure a continuous thermal contact between the lamella and the braking band, independently of the steric configuration assumed by the appendage 23, since the base 22 is not subject to movements because anchored to the disc.

As a function of the shape of the braking band and of the connecting means to the rotation axis, it is possible to place the lamella 21 in direct thermal contact not with the braking band, but with the connecting means to the rotation axis (for example, in contact with the bell 9, as illustrated in the accompanying drawings). This solution may be disadvantageous in terms of response of the lamellae to the temperature variations of the braking band due to the lack of a direct thermal contact between the lamella and band. However, this problem can be ignored in the case in which the connecting means 9 to the rotation axis are made in one piece with the braking band (for example, like the bell illustrated in the accompanying drawings, realised by casting in steel). In fact, in this specific case, there being no particular discontinuity between band and connecting means to the rotation axis (bell), one can assume a good thermal contact between the two parts.

Preferably, in the case of appendages with predominantly axial extension, the appendage 23 of each lamella 21 is shaped in such a way that, when found in the steric (spatial) configuration corresponding to the closed position, it abuts against the flange opposite the one to which the base 22 is anchored or is in direct or indirect thermal contact, as shown in Figures 3 and 5. In this way, in addition to defining for the appendage an abutment for the closing position, the direct thermal contact (although not continuous), between the lamella and the braking band, is increased.

Advantageously, the lamellae 21 can be connected together by means of a common base 22 of annular shape, which serves as anchoring portion to the disc 1, and continuous thermal contact (direct or indirect) with the braking band. The lamellae thus form a single body, indicated with numeral 20 in the accompanying drawings. The common base also serves to distribute heat and thus to make the temperature uniform between all the lamellae.

As said above, the appendages 23 may extend from the common base 22 in both a prevalently axial direction (see Figures 5, 6 and 7) or in a prevalently tangential or circumferential direction (see Figures 8 and 9).

Advantageously, the annular-shaped base 22 is shaped so as to be connected to one of the portions of the disc facing into the internal axial cavity 25 of the disc and, in particular, to one of the two flanges 3 or 4 of the braking band or the connecting means 9 to the rotation axis.

Preferably, in the case of appendages 23 with predominantly axial development, the annular-shaped base 22 is shaped to be associated to said connecting means to the rotation axis (in particular, the bell 9 of the disc), as provided in the embodiment illustrated in Figures 5, 6 and 7. As already said, this allows reducing the fluid-dynamic interference generated by the appendages.

Advantageously, in the case of appendages 23 with predominantly tangential development, the annular-shaped base 22 is shaped to be associated to the flange 4 opposite that connected to the connecting means to the rotation axis, as provided in the embodiment illustrated in Figures 8 and 9. As already said, this solution can be adopted since the specific conformation of the appendages makes negligible the fluid-dynamic interference generated by the appendages themselves.

More in detail, as shown in Figures 8 and 9, the annular base 22 is provided with axial extensions 24, from each of which extends tangentially or circumferentially one or two appendages 23. Unlike the appendages 23, such axial extensions 24 are not substantially subjected to movements and should be arranged between two inlets 11 of two ventilation channels 10.

As already said above, if allowed by the conformation of the disc and by the connecting means to the rotation axis, it is preferable to anchor the base 22 directly to the braking band to reduce thermal resistances and therefore delays in the response of the lamellae.

In particular, the connection of the annular base 22 directly to a flange 3 or 4 of the braking band is possible in the case in which at least one flange 4 has, on the inner edge 2', an axially cylindrical surface, aligned with the inlets 11 of the ventilation channels, as provided in the example of ventilated disc shown in Figure 10. In this case, the annular base 22 can be coupled to the flange by means of a cylindrical portion and the appendages 23 can be formed on the same cylindrical surface of the base (as shown in Figure 8).

In the case in which the disc has at least one flange 4 with the aforesaid characteristics (i.e., axially cylindrical surface, aligned with the inlets 11 of the ventilation channels) or the cylindrical surface is not sufficiently extended (as provided in the example of ventilated disc shown in Figure 1), the annular base 22 should be suitably shaped to be associated to the connecting means to the rotation axis and the appendages 23 should be shaped as a function of the shape of such means (as shown in Figures 5, 6 and 7)

Alternatively with respect to the embodiments illustrated in Figures 5, 6 and 7 or in Figures 8 and 9, which provide a common annular base shared among all the lamellae, the lamellae 21 can be completely separated and be individually anchored to the disc 1.

According to the preferred embodiment illustrated in Figures 5 and 6, the lamellae 21 can cover all the inlets 11 of the ventilation channels distributed along the circumferential extension of the braking band 2. In this way, when the braking band is at a temperature lower than the aforesaid threshold value, the inlets of all the channels are closed (or the opening choked or reduced) and, the ventilation of the disc from inside to outside is completely prevented or significantly limited.

However, one can envisage alternative embodiments wherein the lamellae 21 cover only part of the inlets 11 of the ventilation channels, in such a way that, when the braking band is at a temperature lower than the aforesaid threshold value, only a part of the channel inlets are closed and, in any case, a minimum ventilation flow through the interspace is ensured. The entity of the minimum flow can be defined as a function of the number of inlets not covered by the lamellae. This expedient can be adopted for technical reasons of a conservative nature, for example to avoid peaks of heating of the braking band, ensuring a less brusque warming-up than could result in the case in which all the inlets are closed.

If it is decided to equip only a part of the inlets with lamellae, preferably the inlets covered by the lamellae are uniformly distributed along the entire circumferential development of the braking band 2, alternating with uncovered inlets. This helps to ensure the disc, when in use, in the warm-up phase, as homogeneous as possible thermal state of the braking band, avoiding the formation, even if temporarily, of overheated areas and cooled areas.

Advantageously, the presence of lamellae 21 anchored to the disc, in correspondence of the inner part of the disc (in particular in correspondence of the connecting means to the rotation axis or of one of the two flanges of the braking band), does not significantly change the shapes and overall dimensions of the ventilated disc. In this way, the ventilated disc according to the invention can be installed on a vehicle or on a stationary machine without particular complications with respect to traditional ventilated discs of a similar type.

Advantageously, the reversible closure means 20,21,22,23, of the inlets of the ventilation channels of a ventilated disc can be marketed separately from the ventilation disc, as a device to improve the efficiency of a ventilated disc. In particular, such a device may be used in retrofitting operations of discs already produced or already in use.

Therefore, this invention covers a device for improving the efficiency of a ventilated disc.

In line with what was already described previously, "the efficiency of the ventilated disc" should be understood both in terms of propensity to reach the optimal braking temperatures in the braking band, and energy efficiency linked to the rotation of the disc.

More in detail, the device according to the invention is structured to be stably associated to a ventilated disc, having in particular the characteristics described previously.

The device comprises a plurality of elements 21 that are sensitive to temperature variations of the braking band 2 and are able to automatically assume at least two different steric positions depending on whether the temperature of the braking band 2 is below or above a predefined threshold value.

The device is configured in such a way that, in a first steric configuration corresponding to a thermal state below the aforesaid threshold value, the elements 21 close the inlets of all, or at least a part of, the ventilation channels 10 to prevent, or at least limit, the air flow through the inlets and in such a way that, in a second steric configuration corresponding to a thermal state above the aforesaid threshold value, the elements 21 leave the inlets open to allow an air flow through the latter.

The aforesaid elements 21 define closure means 20,21,22,23 for reversibly closing the inlets 11 of the ventilation channels as a function of the thermal state of the braking band 2.

The device according to the invention coincides with the closure means described above in combination with a ventilated disc. For brevity of description, we will not repeat again what was previously explained in relation to the closure means associated with the disc. Nevertheless, what was previously explained and, in particular the advantages, also refer to the device for improving the efficiency of a ventilated disc, considered separately from the disc itself.

This invention also covers a method for improving the efficiency of a ventilated disc, having in particular the characteristics described previously.

More in detail, the method according to the invention comprises the following steps:
a) providing the disc 1 with closure means 20,21,22,23 to reversibly close the inlets 11 of all or at least a part of the ventilation channels 10; and
b) controlling the closure means 20,21,22,23 depending on the temperature of the braking band 2, so that below a predefined threshold value of the temperature of the braking band 2 the closure means 20,21,22,23 assume a closed position of the inlets 11 of the ventilation channels 10 to prevent or at least restrict the flow of air through the inlets and above said predefined threshold value the closure means 20,21,22,23 assume an open position of the inlets 11 to allow a flow of air through the latter.

The aforesaid predefined threshold value of the temperature of the braking band defines a thermal state below which the band 2 is not in optimum thermal conditions for braking and does not require cooling and beyond which the band 2 is in optimum thermal conditions for braking and starts to require cooling.

Control step b) control allows improving the efficiency of the disc since it enables cooling of the braking band 2 by means of ventilation flows only when necessary. This avoids unnecessary cooling of the band 2 that would slow down reaching the optimum temperature of the band, as well as avoiding subtracting energy from the rotation of the disc with unnecessary losses due to ventilation.

The closure means 20,21,22,23 are sensitive to the temperature of the band so as to move automatically from the closed position to the open position and vice versa to vary the temperature of the band 2, thus making control step b) automatic.

The method according to the invention for improving the efficiency of a ventilated disc resembles the logic that underlies the ventilated disc 1 according to the invention.

The closure means provided in the method coincide with the closure means described in relation to the ventilated disc 1. In this case as well, for brevity of description, we will not repeat again what was previously explained in relation to the closure means associated with the disc. Nevertheless, what was previously explained and, in particular the advantages, also refer to the method for improving the efficiency of a ventilated disc.

This invention also covers the use of a temperature-sensitive component to reversibly close at least one inlet of a ventilation channel of a brake disc of the ventilated type according to the temperature of the braking band of said disc. In particular, the aforesaid component comprises a bimetallic lamella or a lamella made of a shape memory material. Preferably, the aforesaid element can be constituted by a lamina 21 as described above.

The advantages associated with such use are the same as those explained for the method and the device according to the invention.

The invention allows obtaining many advantages in part already described.

The disc brake disc of the ventilated type according to the invention can be brought to optimum operating temperatures for the braking band in shorter times with respect to those of similar traditional ventilated discs, in the same environmental and usage conditions. The reversible closure means of the ventilation channels, sensitive to the temperature of the braking band, allow eliminating, or at least significantly reducing, the cooling of the disc induced by the ventilation in the warm-up phases of disc itself.

Thanks to the adoption of reversible closure means based on the exploitation (joint or alternative) of different coefficients of thermal expansion and shape memory in different thermal states, the intervention of such closing means is made automatic, thus making the ventilated disc according to the invention operationally simple to manage.

In the preferred embodiment of the invention that provides for realising the reversible closure means of the inlets of the ventilation channels with lamellae anchored to the disc 21, in correspondence of its radially inner part, the ventilated disc turns out to be installable on a vehicle without particular complications with respect to traditional ventilated discs of similar type. In fact, the lamellae do not significantly change the shapes and overall dimensions of the ventilated disc.

The ventilated disc according to the invention is also realisable with costs comparable to similar traditional ventilated discs, in the case of large-scale production. In fact, the closure means according to the preferred embodiment of the invention are not particularly expensive to realize or, in any case, can be realized with costs that do not have a significant impact on the total cost of the disc.

Thanks to the invention, it is also possible to make the rotation of the ventilated disc more efficient in all phases of active non-intervention or warming up of the disc, i.e., in the entire operational life of the disc at temperatures below the optimum braking temperature, when cooling is not necessary. In fact, in these phases, thanks to the intervention of the reversible closure means of the inlets of the ventilation channels, ventilation flows are eliminated or significantly reduced. In this way, the power absorbed for pumping air is reduced or eliminated, thus increasing the rotational efficiency of the disc.

The advantages described above also refer to the method for improving the efficiency of a disc covered by this invention.

In particular, the device according to the invention can be marketed separately from the disc for installation on discs already marketed or already in use for retrofitting aimed at improving their efficiency.

Therefore, the invention thus conceived achieves the predefined purposes.

Obviously, it may even assume, in its practical embodiment, forms and configurations different from that illustrated above without, for this reason, departing from the present scope of protection.

Moreover, all the details may be replaced by technically equivalent elements and the dimensions, forms and materials used may be any according to the needs.

## Claims

1. Disc for a brake disc of the ventilated type comprising a braking band (2) defined by two flanges (3, 4) coaxial to an axis (Z), mutually facing and spaced apart to form an interspace (5), ventilation channels (10) for the cooling of the disc being defined inside the interspace (5), each channel (10) extending from at least one inlet (11) made on an inner edge (2') of the braking band (2) to at least one outlet (12) made on an outer edge (2") of the braking band (2), comprising closure means (20, 21, 22, 23) to reversibly close the inlets (11) of all or at least a part of the ventilation channels (10), said closure means (20, 21, 22, 23) being sensitive to the temperature of the braking band (2) so that, when the temperature of the braking band exceeds a predefined threshold value, they automatically move from a closed position of the inlets, in which the flow of air through the inlets is prevented or at least restricted, to at least one open position of the inlets, in which an air flow is allowed through the inlets, and vice versa
wherein the closure means comprising a plurality of obstruction bodies (21) of the inlets (11) suitable to assume at least two different steric configurations depending on whether they are respectively at a temperature below or above a temperature equal to or proportional to the predefined threshold value of the braking band, in a first steric configuration, the obstruction bodies assuming the closed position and in a second steric configuration the obstruction bodies assuming the open position, **characterised in that** the disc (1) is suitably shaped in one or more portions (13) to guide the movement of the obstruction bodies (21) between said at least two steric configurations.

2. Disc according to claim 1, wherein the closure means (20, 21, 22, 23) can move into different open positions depending on the temperature value of the braking band beyond said threshold value, said closed positions differing from each other in the degree of aperture of the inlets of the ventilation channels.

3. Disc according to claim 1 or 2, wherein the transition of an obstruction body between said at least two steric configurations may take place progressively through intermediate steric configurations.

4. Disc according to claim 1, 2 or 3, wherein in the transition from one steric configuration to another each obstruction body (21) follows a predetermined law of variation of the opening for the air passage at the relative inlet (11), said law being proportional or non-proportional to the temperature difference in the braking band.

5. Disc according to one or more of the previous claims, wherein said one or more portions (13) are shaped so as to push the obstruction bodies (21) to follow a predetermined law of variation of the opening for the air passage at the relative inlet (11).

6. Disc according to one or more of the previous claims, wherein the obstruction bodies consist of at least two materials having different coefficients of thermal expansion α, each of such materials forming at least one separate portion of an obstruction body, the different steric configurations deriving from the different dilatometric behaviour of said at least two separate portions when subjected to the same temperature gradient.

7. Disc according to one or more of the previous claims, wherein the obstruction bodies are sized so that during the rotation of the disc they are able to overcome the centrifugal forces generated by the rotation movement of the disc to pass from the configuration corresponding to the closed position to the configuration corresponding to the open position and to maintain this configuration once achieved.

8. Disc according to one or more of the previous claims, wherein the obstruction bodies are structured so as to have elastic and inertial properties such as not to enter into resonance at the working frequencies of the disc (1), preferably the rotation frequency of the brake disc and its multiples.

9. Disc according to one or more of the previous claims, wherein each obstruction body is composed of a lamella (21) placed opposite one or more of the inlets (11) of the ventilation channels (10).

10. Disc according to claim 9, wherein each lamella (21) comprises a base (22) anchored to the disc (1) and an appendage (23), which extends cantilevered from the base (22) positioning itself opposite one or more of the inlets (11) of the ventilation channels (10), and is the portion subject to assume said at least two different steric configurations.

11. Disc according to claim 10, wherein the base (22) of each lamella (21) is in thermal contact directly or indirectly with one of the two flanges (3, 4) which define the braking band (2).

12. Disc according to claim 10 or 11, wherein the lamellae (21) are connected one to each other by means of a common base (22) of an annular shape, anchored to one of the two flanges of the braking band (2) or to connection means (9) of the disc (1) to a rotation axis, at the inner edge (2') of said band.

13. Disc according to one or more of the claims from 10 to 12, wherein the lamellae (21) cover only a part of the inlets (11) of the ventilation channels, preferably the inlets covered by the lamellae being evenly distributed all along the circumferential extension of the braking band(2).

14. Disc according to one or more of the claims from 10 to 12, wherein the lamellae (21) cover all the inlets (11) of the ventilation channels distributed along the circumferential extension of the braking band (2).

15. Method for improving the efficiency of a disc for a brake disc of the ventilated type according to any of claims 1 to 14, the disc (1) comprising a braking band (2) defined by two flanges (3, 4) coaxial to an axis (Z), which face each other and are spaced apart to form an interspace (5), ventilation channels (10) for the cooling of the disc being defined inside the interspace (5), each channel (10) extending from at least one inlet (11) made on an inner edge (2') of the braking band (2) to at least an outlet (12) made on an outer edge (2") of the braking band (2), said method comprising the following operating steps:
a) providing the disc (1) with closure means (20, 21, 22, 23) to reversibly close the inlets (11) of all or at least a part of the ventilation channels (10); and
b) controlling the closure means (20, 21, 22, 23) depending on the temperature of the braking band (2), so that below a predefined threshold value of the temperature of the braking band (2) said closure means (20, 21, 22, 23) assume a closed position of the inlets (11) of the ventilation channels (10) to prevent or at least restrict the flow of air through the inlets and above said predefined threshold value said closure means (20, 21, 22, 23) assume an open position of the inlets (11) to allow a flow of air through the latter,
said predefined threshold value of the temperature of the braking band defining a thermal state below which the band (2) is not in the thermal conditions for braking and does not require cooling and above which the band (2) is in the thermal conditions for braking and begins to require cooling, the control step b) making it possible to improve the efficiency of the disc as it enables the cooling of the braking band (2) by means of ventilation flows only when necessary, so as to avoid unnecessary cooling of the band (2) that would slow down the warming up of the band and thus avoid the removal of energy from the rotation of the disc with unnecessary losses due to ventilation, the closure means (20, 21, 22, 23) being sensitive to the temperature of the braking band so as to move automatically from the closed position to the open position and vice versa on variation of the temperature of the band (2), making said controlling step b) automatic
wherein the closure means comprise a plurality of obstruction bodies (21) of the inlets (11) suitable to assume at least two different steric configurations depending on whether they are respectively at a temperature below or above a temperature equal to or proportional to the predefined threshold value of the braking band, in a first steric configuration the obstruction bodies assuming the closed position and in a second steric configuration the obstruction bodies assuming the open position and
wherein the disc (1) is suitably shaped in one or more portions (13) to guide the movement of the obstruction bodies (21) between said at least two steric configurations.

## Patentansprüche

1. Scheibe für eine Bremsscheibe vom belüfteten Typ, die ein Bremsband (2) umfasst, das durch zwei Flansche (3, 4) koaxial zu einer Achse (Z) definiert ist, die einander zugewandt und voneinander beabstandet sind, um einen Zwischenraum (5) zu bilden, wobei Belüftungskanäle (10) zum Kühlen der Scheibe innerhalb des Zwischenraums (5) definiert sind, wobei sich jeder Kanal (10) von zumindest einem Einlass (11), der an einer Innenkante (2') des Bremsbandes (2) ausgebildet ist, zu zumindest einem Auslass (12) erstreckt, der an einer Außenkante (2") des Bremsbandes (2) ausgebildet ist, umfassend Schließmittel (20, 21, 22, 23), um die Einlässe (11) aller oder zumindest eines Teils der Belüftungskanäle (10) reversibel zu verschließen, wobei die Schließmittel (20, 21, 22, 23) auf die Temperatur des Bremsbandes (2) reagieren, so dass, wenn die Temperatur des Bremsbandes einen vordefinierten Schwellenwert überschreitet, sie sich automatisch von einer geschlossenen Position der Einlässe, in der der Luftstrom durch die Einlässe verhindert oder zumindest eingeschränkt wird, zu zumindest einer offenen Position der Einlässe bewegen, in der ein Luftstrom durch die Einlässe erlaubt ist, und umgekehrt,
wobei die Schließmittel eine Mehrzahl von Sperrkörpern (21) der Einlässe (11) umfassen, die geeignet sind, zumindest zwei verschiedene sterische Konfigurationen anzunehmen, und zwar abhängig davon, ob sie sich jeweils bei einer Temperatur unterhalb oder oberhalb einer Temperatur befinden, die gleich dem oder proportional zu dem vordefinierten Schwellenwert des Bremsbands ist, wobei die Sperrkörper in einer ersten sterischen Konfiguration die geschlossene Position einnehmen und die Sperrkörper in einer zweiten sterischen Konfiguration die offene Position einnehmen,
**dadurch gekennzeichnet, dass** die Scheibe (1) in einem oder mehreren Abschnitten (13) geeignet geformt ist, um die Bewegung der Sperrkörper (21) zwischen den zumindest zwei sterischen Konfigurationen zu führen.

2. Scheibe nach Anspruch 1, wobei sich die Schließmittel (20, 21, 22, 23) in Abhängigkeit von dem Temperaturwert des Bremsbandes über den Schwellenwert hinaus in verschiedene Öffnungspositionen bewegen können, wobei sich die Schließpositionen in dem Öffnungsgrad der Einlässe der Belüftungskanäle unterscheiden.

3. Scheibe nach Anspruch 1 oder 2, wobei der Übergang eines Sperrkörpers zwischen den zumindest zwei sterischen Konfigurationen schrittweise durch sterische Zwischenkonfigurationen erfolgen kann.

4. Scheibe nach Anspruch 1, 2 oder 3, wobei beim Übergang von einer sterischen Konfiguration zu einer anderen jeder Sperrkörper (21) einem vorbestimmten Änderungsgesetz der Öffnung für den Luftdurchgang an dem relativen Einlass (11) folgt, wobei das Gesetz proportional oder nicht proportional zu der Temperaturdifferenz in dem Bremsband ist.

5. Scheibe nach einem oder mehreren der vorhergehenden Ansprüche, wobei der eine oder die mehreren Abschnitte (13) so geformt sind, dass sie die Sperrkörper (21) dahingehend drücken, einem vorbestimmten Änderungsgesetz der Öffnung für den Luftdurchgang an dem relativen Einlass (11) zu folgen.

6. Scheibe nach einem oder mehreren der vorhergehenden Ansprüche, wobei die Sperrkörper aus zumindest zwei Materialien mit unterschiedlichen Wärmeausdehnungskoeffizienten α bestehen, wobei jedes dieser Materialien zumindest einen separaten Abschnitt eines Sperrkörpers bildet, wobei sich die unterschiedlichen sterischen Konfigurationenaus dem unterschiedlichen dilatometrischen Verhalten der zumindest zwei separaten Abschnitte ergeben, wenn sie demselben Temperaturgradienten ausgesetzt sind.

7. Scheibe nach einem oder mehreren der vorhergehenden Ansprüche, wobei die Sperrkörper so bemessen sind, dass sie in der Lage sind, die während der Drehung der Scheibe durch die Drehbewegung der Scheibe erzeugten Zentrifugalkräfte zu überwinden, um von der Konfiguration, die der geschlossenen Position entspricht, zu der Konfiguration zu wechseln, die der offenen Position entspricht, und diese Konfiguration beizubehalten, sobald sie erreicht ist.

8. Scheibe nach einem oder mehreren der vorhergehenden Ansprüche, wobei die Sperrkörper so strukturiert sind, dass sie elastische und träge Eigenschaften aufweisen, um bei den Arbeitsfrequenzen der Scheibe (1), vorzugsweise der Drehfrequenz der Bremsscheibe und ihrer Vielfachen nicht in Resonanz zu treten.

9. Scheibe nach einem oder mehreren der vorhergehenden Ansprüche, wobei jeder Sperrkörper aus einer Lamelle (21) besteht, die gegenüber einem oder mehreren der Einlässe (11) der Belüftungskanäle (10) platziert ist.

10. Scheibe nach Anspruch 9, wobei jede Lamelle (21) eine Basis (22), die an der Scheibe (1) verankert ist, und ein Anhängsel (23) umfasst, das sich freitragend von der Basis (22) erstreckt und sich gegenüber einem oder mehreren der Einlässe (11) der Belüftungskanäle (10) positioniert, und der Abschnitt ist, der die zumindest zwei verschiedenen sterischen Konfigurationen annehmen soll.

11. Scheibe nach Anspruch 10, wobei die Basis (22) jeder Lamelle (21) direkt oder indirekt in thermischem Kontakt mit einem der beiden Flansche (3, 4) ist, die das Bremsband (2) definieren.

12. Scheibe nach Anspruch 10 oder 11, wobei die Lamellen (21) mittels einer gemeinsamen Basis (22) ringförmiger Form miteinander verbunden sind, die an einem der beiden Flansche des Bremsbandes (2) oder an Verbindungsmitteln (9) der Scheibe (1) zu einer Drehachse verankert ist, und zwar an der Innenkante (2') des Bandes.

13. Scheibe nach einem oder mehreren der Ansprüche 10 bis 12, wobei die Lamellen (21) nur einen Teil der Einlässe (11) der Belüftungskanäle bedecken, wobei vorzugsweise die Einlässe, die von den Lamellen bedeckt sind, alle gleichmäßig entlang der Umfangserstreckung des Bremsbandes (2) verteilt sind.

14. Scheibe nach einem oder mehreren der Ansprüche 10 bis 12, wobei die Lamellen (21) alle Einlässe (11) der Lüftungskanäle bedecken, die entlang der Umfangserstreckung des Bremsbandes (2) verteilt sind.

15. Verfahren zum Verbessern des Wirkungsgrades einer Scheibe für eine Bremsscheibe vom belüfteten Typ nach einem der Ansprüche 1 bis 14, wobei die Scheibe (1) die ein Bremsband (2) umfasst, das durch zwei Flansche (3, 4) koaxial zu einer Achse (Z) definiert ist, die einander zugewandt und voneinander beabstandet sind, um einen Zwischenraum (5) zu bilden, wobei Belüftungskanäle (10) zum Kühlen der Scheibe innerhalb des Zwischenraums (5) definiert sind, wobei sich jeder Kanal (10) von zumindest einem Einlass (11), der an einer Innenkante (2') des Bremsbandes (2) ausgebildet ist, zu zumindest einem Auslass (12) erstreckt, der an einer Außenkante (2") des Bremsbandes (2) ausgebildet ist, wobei das Verfahren die folgenden Betriebsschritte umfasst:
a) Versehen der Scheibe (1) mit Schließmitteln (20, 21, 22, 23), um die Einlässe (11) aller oder zumindest eines Teils der Belüftungskanäle (10) reversibel zu verschließen; und
b) Steuern bzw. Regeln der Schließmittel (20, 21, 22, 23) in Abhängigkeit von der Temperatur des Bremsbandes (2), so dass unterhalb eines vordefinierten Schwellenwertes der Temperatur des Bremsbandes (2) die Schließmittel (20, 21, 22, 23) eine geschlossene Position der Einlässe (11) der Belüftungskanäle (10) einnehmen, um den Luftstrom durch die Einlässe zu verhindern oder zumindest zu begrenzen, und über dem vordefinierten Schwellenwert die Schließmittel (20, 21, 22, 23) eine offene Position der Einlässe (11) einnehmen, um einen Luftstrom durch die letzteren zu erlauben,
wobei der vordefinierte Schwellenwert der Temperatur des Bremsbandes einen thermischen Zustand definiert, unter dem sich das Band (2) nicht in den thermischen Bedingungen zum Bremsen befindet und keine Kühlung erfordert, und oberhalb dessen sich das Band (2) in den thermischen Bedingungen zum Bremsen befindet und beginnt, Kühlung zu erfordern, wobei der Steuer- bzw. Regelschritt b) es ermöglicht, den Wirkungsgrad der Scheibe zu verbessern, da er die Kühlung des Bremsbandes (2) mittels Ventilationsströmungen nur bei Bedarf ermöglicht, um eine unnötige Kühlung des Bandes (2) zu vermeiden, was das Aufwärmen des Bandes verlangsamen würde und somit das Abziehen von Energie aus der Drehung der Scheibe mit unnötigen Verlusten durch Belüftung verhindern würde, wobei die Schließmittel (20, 21, 22, 23) auf die Temperatur des Bremsbandes (2) reagieren, so dass sie sich bei einer Änderung der Temperatur des Bandes (2) automatisch von der geschlossenen Position zu der offenen Position und umgekehrt bewegen, wodurch der Steuer- bzw. Regelschritt b) automatisch wird,
wobei die Schließmittel eine Mehrzahl von Sperrkörpern (21) der Einlässe (11) umfassen, die geeignet sind, zumindest zwei verschiedene sterische Konfigurationen anzunehmen, und zwar abhängig davon, ob sie sich jeweils bei einer Temperatur unterhalb oder oberhalb einer Temperatur befinden, die gleich dem oder proportional zu dem vordefinierten Schwellenwert des Bremsbands ist, wobei die Sperrkörper in einer ersten sterischen Konfiguration die geschlossene Position einnehmen und die Sperrkörper in einer zweiten sterischen Konfiguration die offene Position einnehmen,
wobei die Scheibe (1) in einem oder mehreren Abschnitten (13) geeignet geformt ist, um die Bewegung der Sperrkörper (21) zwischen den zumindest zwei sterischen Konfigurationen zu führen.

## Revendications

1. Disque pour un disque de frein du type ventilé comprenant une bande de freinage (2) définie par deux brides (3, 4) coaxiales à un axe (Z), se faisant face et espacées pour former un espace intermédiaire (5), des canaux de ventilation (10) pour le refroidissement du disque étant définis à l'intérieur de l'espace intermédiaire (5), chaque canal (10) s'étendant d'au moins une entrée (11) réalisée sur un bord intérieur (2') de la bande de freinage (2) à au moins une sortie (12) réalisée sur un bord extérieur (2") de la bande de freinage (2), comprenant des moyens de fermeture (20, 21, 22, 23) pour fermer de manière réversible les entrées (11) de tous ou d'au moins une partie des canaux de ventilation (10), lesdits moyens de fermeture (20, 21, 22, 23) étant sensibles à la température de la bande de freinage (2) de sorte que, lorsque la température de la bande de freinage excède une valeur seuil prédéfinie, ils se déplacent automatiquement d'une position fermée des entrées, dans laquelle le flux d'air à travers les entrées est empêché ou au moins restreint, à au moins une position ouverte des entrées, dans laquelle un flux d'air est autorisé à travers les entrées, et inversement
dans lequel les moyens de fermeture comprenant une pluralité de corps d'obstruction (21) des entrées (11) adaptés pour adopter au moins deux configurations stériques différentes selon qu'ils sont respectivement à une température inférieure ou supérieure à une température égale à ou proportionnelle à la valeur seuil prédéfinie de la bande de freinage, dans une première configuration stérique, les corps d'obstruction adoptant la position fermée et dans une deuxième configuration stérique, les corps d'obstruction adoptant la position ouverte, **caractérisé en ce que** le disque (1) est formé de manière adaptée dans une ou plusieurs portions (13) pour guider le mouvement des corps d'obstruction (21) entre lesdites au moins deux configurations stériques.

2. Disque selon la revendication 1, dans lequel les moyens de fermeture (20, 21, 22, 23) peuvent se déplacer dans différentes positions ouvertes en fonction de la valeur de température de la bande de freinage au-delà de ladite valeur seuil, lesdites positions fermées différant l'une de l'autre dans le degré d'ouverture des entrées des canaux de ventilation.

3. Disque selon la revendication 1 ou 2, dans lequel la transition d'un corps d'obstruction entre lesdites au moins deux configurations stériques peut avoir lieu progressivement par des configurations stériques intermédiaires.

4. Disque selon la revendication 1, 2 ou 3, dans lequel dans la transition d'une configuration stérique à une autre, chaque corps d'obstruction (21) suit une loi prédéterminée de variation de l'ouverture pour le passage d'air au niveau de l'entrée relative (11), ladite loi étant proportionnelle ou non-proportionnelle à la différence de température dans la bande de freinage.

5. Disque selon une ou plusieurs des revendications précédentes, dans lequel lesdites une ou plusieurs portions (13) sont formées de façon à pousser les corps d'obstruction (21) à suivre une loi prédéterminée de variation de l'ouverture pour le passage d'air au niveau de l'entrée relative (11).

6. Disque selon une ou plusieurs des revendications précédentes, dans lequel les corps d'obstruction consistent en au moins deux matériaux ayant différents coefficients de dilatation thermique α, chacun de ces matériaux formant au moins une portion séparée d'un corps d'obstruction, les différentes configurations stériques dérivant du comportement dilatométrique différent desdites au moins deux portions séparées lorsque soumises au même gradient de température.

7. Disque selon une ou plusieurs des revendications précédentes, dans lequel les corps d'obstruction sont dimensionnés de sorte que pendant la rotation du disque, ils sont capables de surmonter les forces centrifuges générées par le mouvement de rotation du disque pour passer de la configuration correspondant à la position fermée à la configuration correspondant à la position ouverte et pour maintenir cette configuration une fois atteinte.

8. Disque selon une ou plusieurs des revendications précédentes, dans lequel les corps d'obstruction sont structurés de façon à avoir des propriétés élastiques et inertielles de façon à ne pas entrer en résonance aux fréquences de travail du disque (1), de préférence la fréquence de rotation du disque de frein et ses multiples.

9. Disque selon une ou plusieurs des revendications précédentes, dans lequel chaque corps d'obstruction se compose d'une lamelle (21) placée en regard d'une ou plusieurs des entrées (11) des canaux de ventilation (10).

10. Disque selon la revendication 9, dans lequel chaque lamelle (21) comprend une base (22) ancrée au disque (1) et un appendice (23), qui s'étend en porte-à-faux de la base (22) se positionnant elle-même en regard d'une ou plusieurs des entrées (11) des canaux de ventilation (10), et est la portion soumise à l'adoption desdites au moins deux configurations stériques différentes.

11. Disque selon la revendication 10, dans lequel la base (22) de chaque lamelle (21) est en contact thermique directement ou indirectement avec une des deux brides (3, 4) qui définissent la bande de freinage (2).

12. Disque selon la revendication 10 ou 11, dans lequel les lamelles (21) sont reliées l'une à l'autre au moyen d'une base commune (22) d'une forme annulaire, ancrée à une des deux brides de la bande de freinage (2) ou à des moyens de connexion (9) du disque (1) à un axe de rotation, au niveau du bord intérieur (2') de ladite bande.

13. Disque selon une ou plusieurs des revendications 10 à 12, dans lequel les lamelles (21) couvrent seulement une partie des entrées (11) des canaux de ventilation, de préférence les entrées couvertes par les lamelles étant distribuées de manière régulière tout au long de l'extension circonférentielle de la bande de freinage (2).

14. Disque selon une ou plusieurs des revendications 10 à 12, dans lequel les lamelles (21) couvrent toutes les entrées (11) des canaux de ventilation distribuées le long de l'extension circonférentielle de la bande de freinage (2).

15. Procédé d'amélioration du rendement d'un disque pour un disque de frein du type ventilé selon l'une quelconque des revendications 1 à 14, le disque (1) comprenant une bande de freinage (2) définie par deux brides (3, 4) coaxiales à un axe (Z), qui se font face et sont espacées pour former un espace intermédiaire (5), des canaux de ventilation (10) pour le refroidissement du disque étant définis à l'intérieur de l'espace intermédiaire (5), chaque canal (10) s'étendant d'au moins une entrée (11) réalisée sur un bord intérieur (2') de la bande de freinage (2) à au moins une sortie (12) réalisée sur un bord extérieur (2") de la bande de freinage (2), ledit procédé comprenant les étapes de fonctionnement suivantes :
a) fourniture du disque (1) avec des moyens de fermeture (20, 21, 22, 23) pour fermer de manière réversible les entrées (11) de tous ou d'au moins une partie des canaux de ventilation (10) ; et
b) commande des moyens de fermeture (20, 21, 22, 23) en fonction de la température de la bande de freinage (2), de sorte qu'en dessous d'une valeur seuil prédéfinie de la température de la bande de freinage (2), lesdits moyens de fermeture (20, 21, 22, 23) adoptent une position fermée des entrées (11) des canaux de ventilation (10) pour empêcher ou au moins restreindre le flux d'air à travers les entrées et qu'au-dessus de ladite valeur seuil prédéfinie, lesdits moyens de fermeture (20, 21, 22, 23) adoptent une position ouverte des entrées (11) pour permettre un flux d'air à travers ces dernières,
ladite valeur seuil prédéfinie de la température de la bande de freinage définissant un état thermique en dessous de laquelle la bande (2) n'est pas dans les conditions thermiques de freinage et ne nécessite pas de refroidissement et au-dessus de laquelle la bande (2) est dans les conditions thermiques de freinage et commence à nécessiter un refroidissement, l'étape de commande b) permettant d'améliorer le rendement du disque étant donné qu'elle permet le refroidissement de la bande de freinage (2) au moyen de flux de ventilation seulement lorsque cela est nécessaire, de façon à éviter un refroidissement inutile de la bande (2) qui ralentirait le réchauffement de la bande et éviter ainsi le retrait d'énergie de la rotation du disque avec des pertes inutiles dues à la ventilation, les moyens de fermeture (20, 21, 22, 23) étant sensibles à la température de la bande de freinage de façon à se déplacer automatiquement de la position fermée à la position ouverte et inversement lors de la variation de la température de la bande (2), rendant ladite étape de commande b) automatique
dans lequel les moyens de fermeture comprennent une pluralité de corps d'obstruction (21) des entrées (11) adaptés pour adopter au moins deux configurations stériques différentes selon qu'ils sont respectivement à une température inférieure ou supérieure à une température égale à ou proportionnelle à la valeur seuil prédéfinie de la bande de freinage, dans une première configuration stérique, les corps d'obstruction adoptant la position fermée et dans une deuxième configuration stérique, les corps d'obstruction adoptant la position ouverte et
dans lequel le disque (1) est formé de manière adaptée dans une ou plusieurs portions (13) pour guider le mouvement des corps d'obstruction (21) entre lesdites au moins deux configurations stériques.
